# EUROPEAN PATENT APPLICATION

(11) **EP 1 093 877 A1**
(43) Date of publication of application: **25.04.2001**
(21) Application number: 00122265.2
(22) Date of filing: 19.10.2000
(51) Int. Cl.: B23C 5/10

(54) **End mill holder with a throwaway tip attached thereto**

(30) Priority: 19.10.1999 JP 29732999
(71) Applicant: Daishowa Seiki Co., Ltd., Higashiosaka-shi Osaka-fu (JP)
(72) Inventor: Kubo, Haruaki, c/o Daishowa Seiki Co., Ltd., Higashiosaka-shi, Osaka (JP)
(74) Representative: HOFFMANN - EITLE

(57) **Abstract**

An end mill holder comprises a holder main body; a pair of tip engagement grooves which are formed in the holder main body 1 at the positions of point symmetry relative to a central axis O of the holder main body and are extended longitudinally of the holder main body with a deviation of a predetermined axial spiral angle relative to the axis; a slit-like notch 4 formed in the holer main body 1 between a pair of the engagement grooves so as to communicate with one another of the grooves; the holder main body 1 being subdivided into a pair of chip clamping half bodies on bilateral sides from both the engagement grooves 2, 3 and the slit-like notch 4 communicating therewith; a clamping bolt 7 screwed into both the chip clamping half bodies; wherein the tips 8, 9 are fitted into the engagement grooves 2, 3 and are forcibly clamped to a pair of the chip clamping half bodies 5, 6 by the clamp bolt 7 screwed thereinto.

## Description

### Technical field

The present invention relates to an end mill holder and a so-called throw-away tip attached interchangeably thereto, which function and are used totally as an end mill.

### Background and summary of the invention

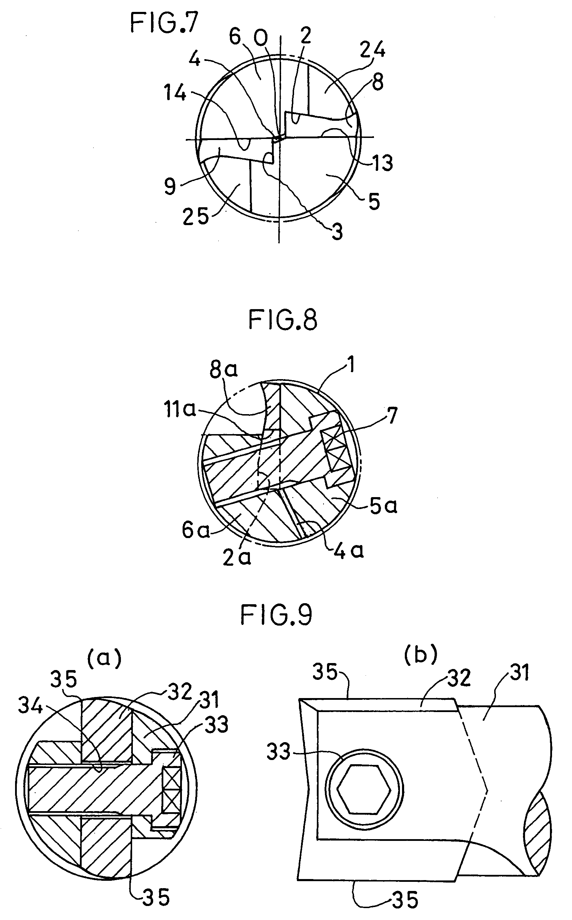

There has been conventionally such an end mill holder with a throw-away tip attached thereto, as shown in Fig. 9 (a) and (b), wherein a throw-away tip 32 is set in a free end of a main body 31 of the end mill holder, and a clamp bolt 33 is screwed from a lateral side into the holder main body 31 and a through hole 34 formed in the tip 32, and thereby the tip 32 is clamped in the end of the holder main body 31.

The conventional tip 32 has major cutting edges 35, 35 formed axially straight at the opposite peripheral margins and has the above-described through hole 34 at the center position so as to be fixed in the holder main body 31 with the clamp bolt 33 screwed through the through hole 34. Therefore, when it is desired to arrange the major cutting edges 35, 35 with an angle (spiral angle) with reference to the axial line of the holder main body, it is required to form rake faces of the tip 32 on both the lateral side faces at the locations of point symmetry in a vertical plane so as extend in a gradually narrowing way away the axial line. Naturally, the tip 32 is limited in thickness, so that the cutting edges and lateral side faces cannot take a greater angle of the axial spiral, i.e. cannot be deviated more greatly from the axial line. Besides, the lateral side faces so axially deviated is formed by reducing the tip 32 in thickness, so that the toughness of the tip is lowered.

To overcome the above-mentioned problems, it is an objective of the invention to reduce the cutting resistance and cut deeply tangentially to a curve of a greater diameter.

The present invention provides an end mill holder adapted to allow the attachment of tip(s) thereto with a greater angle of an axial spiral.

Another objective of the invention resides in reducing a main body of an end mill holder to a smaller size.

A further objective of the invention resides in securing the tip(s) firmly to the main body of the end mill holder.

The other objectives will become evident from the following detailed description of the invention.

### Brief description of the drawings

Fig. 1 is a front view of one embodiment of the invention;
fig. 2 is a side elevational view of the same;
Fig. 3 is a cross-sectional view taken on line A-A of Fig. 1;
Fig. 4 is a cross-sectional view taken on line B-B of Fig. 1;
Fig. 5 is a cross-sectional view of a modification, taken on line B-B of Fig. 1;
Fig. 6 is a top view of the embodiment;
Fig. 7 is an elevational side view of Fig. 1 in an anticlockwise rotation by 90 degrees;
Fig. 8 is a cross-sectional view of another embodiment, corresponding to Fig. 5, and
Fig. 9 shows the prior art in which (a) is a cross-sectional view and (b) is a front view.

### Detailed description of preferred embodiments of the invention

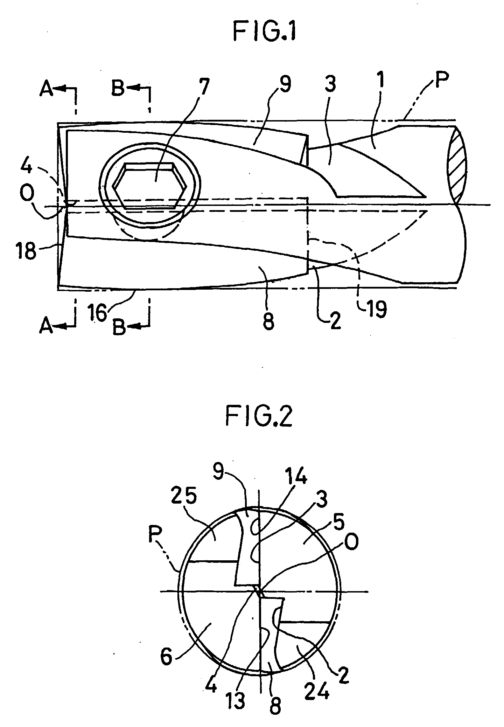

In Figs. 1 to 7, there is shown one embodiment of an end mill holder and throw-away tips attached thereto of the invention. A pair of tips 8, 9 are attached to a main body of an end mill holder 1 at the positions of point symmetry in a vertical plane relative to an central axis O of the holder main body 1, wherein each of the tips 8, 9 is inserted longitudinally and fitted into each of engagement grooves 2, 3 provided in the holder main body 1, and then are fixed in the holder main body 1 so as to be clamped with a clamp bolt 7. Incidentally, P in every figures shows a cutting line.

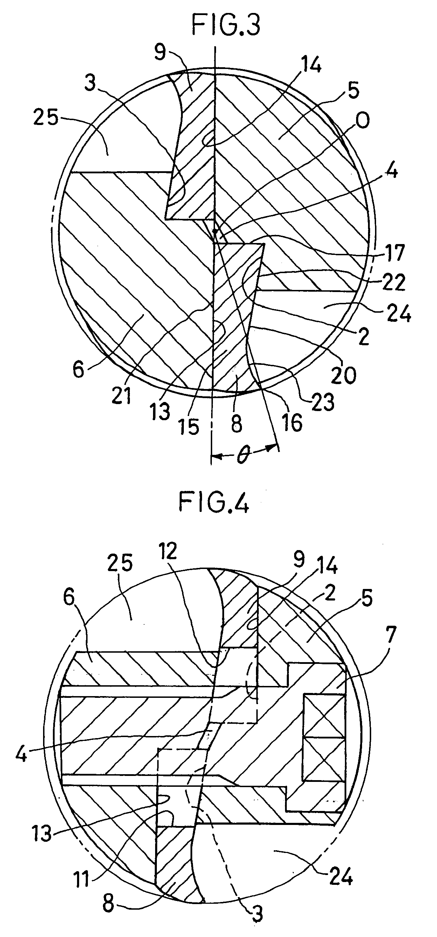

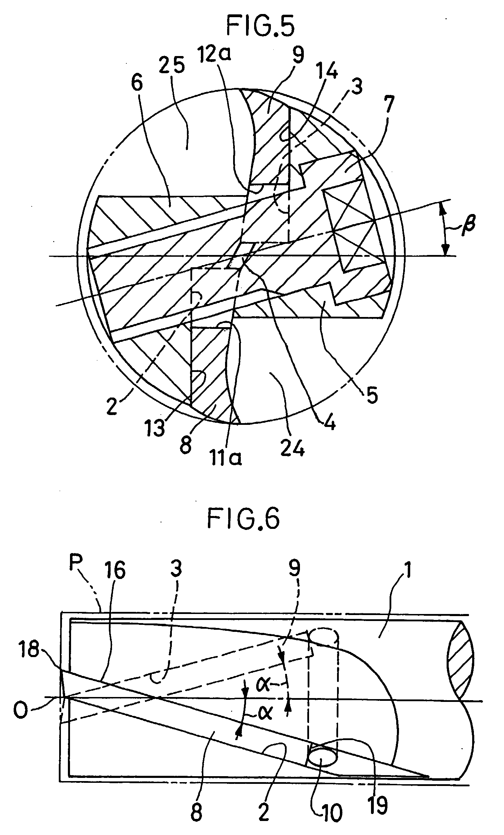

In more details, a pair of the engagement grooves 2, 3 are formed in the holder main body 1 at the positions of point symmetry relative to the central axis O and are extended longitudinally of the main body, as shown in Fig. 6, with a deviation of a predetermined axial spiral angle α relative to the axis. A slit-like notch 4 is formed in the holer main body 1 between a pair of the engagement grooves 2, 3 by a wire cut electric discharge machining so as to communicate with one another of the grooves 2, 3, so that the holder main body 1 is subdivided into a pair of chip clamping half bodies 5, 6 , as shown in Figs. 2-5 and 7, on bilateral sides from both the engagement grooves 2, 3 and the slit 4 communicating therewith. The tips 8, 9, fitted into the engagement grooves 2, 3, are forcibly clamped to a pair of the chip clamping half bodies 5, 6 by the clamp bolt 7 (Figs. 4, 5) screwed thereinto.

The formation of the engagement grooves 2, 3 is made efficiently by the wire cut electric discharge machining so as to pass obliquely, as shown in Figs. 1 and 6, completely through the holder main body from the front end face to one lateral side. This means that the tips 8, 9 are longitudinally axially fitted in the engagement grooves 8, 9 without positioning at a desired longitudinal location. Therefore, a split stopper pin 10 is squeezed, as in Fig. 6, into a pin hole formed diametrically in the holder main body 1 while the opposite ends of the pin 10 are exposed to the engagement grooves 2, 3. So the back end of the tips 8, 9 is longitudinally blocked by the contact with the pin 10. This arrangement enables the proper longitudinal positioning of the tips 8, 9 with a simple structure.

As evident from Figs. 2, 3 and 7, a pair of the engagement grooves 2, 3 are formed into a shape like a dovetail groove in cross section, i. e. the bottom face near to the central axis O is broader in width than the opening of the grooves. Accordingly, the tips 8, 9, fitted longitudinally into the engagement grooves 2, 3, have an slanting lateral face 22, at the interior part of the rake face side surface 20, formed so as to match the dovetail-shaped engagement grooves 2, 3.

Such a formation of the engagement groove into a dovetail-like shape in cross section ensures the best longitudinal fitting of the tips 8, 9 into the engagement grooves 2, 3, so that the tips 8, 9 can be held securely in the holder main body 1 even when the holder main body 1 is caused to rotate in a high speed.

Both the tips 8, 9 have arcuate cutouts 11, 12 (11a, 12a), as shown in Figs. 4 and 5, on the side of the opposing interior ends, of which both are totally of such a size that the clamp bolt 7 can pass through both the cutouts when the clamp bolt 7 is screwed into both the clamping half bodies 5, 6.

At that time, both the clamping half bodies 5, 6 are elastically deformed and the width of engagement grooves 5, 6 and slit-like notch 4 each gets narrower, so that the tip bodies 15 are forcibly clamped in the engagement grooves 2, 3 of the opposing half bodies 5, 6.

In the arrangement as shown in Fig. 4, the clamp bolt 7 is screwed into both the clamping half bodies 5, 6 in a direction perpendicular to the fitting seats 12, 13 of the chip bodies 15. However, it is preferable that the clamp bolt 7 is so arranged as to be screwed obliquely into both the clamping half bodies 5, 6, as shown in Fig. 5, in a direction of a requisite angle β from a line perpendicular to the fitting seats 12, 13 of the chip bodies 15. In the latter case, the arcuate cutouts 11a, 12a in the tips 8, 9 are slightly great in a cutting circular radius than those 11, 12 of the former case as shown in Fig. 4.

According to the arrangement as shown in Fig. 5, each of tip pockets 24, 25, associating with the rake faces of the tips 8, 9, can take a space greater than those in the arrangement of Fig. 4. As a result of it, the discharge of cut chips is well performed. To the further advantageous, it is possible to accomplish another effect of cutting a workpiece deeply tangentially to a curve of a greater diameter. Incidentally, the clamp bolt 7 is shown in Fig. 5 as being screwed in the direction of a positive angle from the line perpendicular to the fitting seats 2, 3 of the chips. However, it is allowed to screw the clamp bolt 7 in the direction of a negative angle. In every case, a clamping force is increased toward each of the tips 8, 9 by way of the clamping half bodies 5, 6, so that a steady cutting operation of the tips can be performed.

In the above-described embodiment, a pair of the tips 8, 9 are attached to the holder main body 1, but the invention is not limited to the use of a pair of tips. It is allowed to attach a single tip 8a, as shown in Fig. 8, to the holer main body 1. Particularly, in this case, one engagement groove 2a is formed in the holder main body 1 and is extended longitudinally of the main body, as shown in Fig. 6, with a deviation of a predetermined axial spiral angle α relative to the axis. A slit-like notch 4a is formed in the holder main body 1 so as to cross the holder main body 1 from the engagement groove 2a to the opposite side, so that the holder main body 1 is subdivided into a pair of chip clamping half bodies 5, 6 on bilateral sides from the engagement groove 2a and the slit-like notch 4a. The tip 8a, fitted into the engagement groove 2a, is forcibly clamped to a pair of the chip clamping half bodies 5, 6 by the clamp bolt 7 which is screwed thereinto through a cutout 11a formed in the tip 8a. In this case also, the tip 8a is extended obliquely in the holder main body 1 with a deviation of a predetermined axial spiral angle α relative to the axis of the holder main body 1, so that the tip can take the axial spiral of a greater angle α.

The tips 8(8a), 9, adopted in the invention, comprises a plate-like tip body 15 elongated longitudinally as shown in Figs. 1, 3 and 6, which has the major cutting edge 16 formed on the outer face of the opposing longitudinal margins, a positioning face 17 (Fig. 3) on the inner face, an end cutting edge 18 on the forward end face, and opposing front and rear lateral faces 20, 21 of the tip body 15 which are of a surface to be clamped.

In the tip bodies 15, the laterally exposed front face 20 has, as shown in Fig. 3, a slanting face 23 of the requisite radial rake angle θ on the section adjacent to the major cutting edge 16, and also has another slanting face 22 on the section adjacent to the positioning face 17, which face 22 is so formed as to match the cross-sectional dovetail-like shape of the engagement grooves 2, 3.

Incidentally, in the tip bodies 15, there are provided semicircular cutoffs 11, 12 (11a, 12a), as described above, in the opposing interior ends including the positioning face 17 of the tip bodies 15 in order to screw the clamp bolt 7 through.

As described above, a pair of the engagement grooves 2, 3 are formed in the holder main body 1 at the positions of point symmetry relative to the central axis O, longitudinally of the main body with a deviation of a predetermined axial spiral angle α relative to the axis. Further, the slit-like notch 4 is formed in the holer main body 1 between a pair of the engagement grooves 2, 3 so as to communicate with one another of the grooves 2, 3 and subdivide the holder main body 1 into a pair of chip clamping half bodies 5, 6 on bilateral sides from both the engagement grooves 2, 3 and the slit-like notch 4 communicating therewith. Further, a pair of the tips 8, 9 have a passing space formed by the cutouts 11, 12 (11a, 12a) provided in the opposing interior ends side, with a size that the clamp bolt 7 can pass through. In this arrangement, both each of the tips 8, 9 are eventually attached to the holder main body 1 by screwing the clamp bolt 7 from one lateral side into a pair of the chip clamping half bodies 5, 6 and the passing space of cutouts while the tips are fitted into the engagement grooves 2, 3, longitudinally of the holder main body with a deviation of a predetermined axial spiral angle α. Accordingly, the axial spiral angle with which the tips are arranged reduces a cutting resistance and makes it possible to cut a workpiece deeply tangentially to a curve of a greater diameter.

Additionally, the tips 8, 9 are forcibly clamped to a pair of the chip clamping half bodies 5, 6 by the clamp bolt 7 (Figs. 4, 5) screwed through the cutouts 11, 12 formed in the tips. Thus, with the use of the single clamp bolt 7, a pair of the tips 8, 9 can be fixed in the holder main body 1. This enables the reduction of the holder main body to a smaller size and the simplified construction for attachment. Further, as a result of that the tips. 8, 9 are forcibly clamped to a pair of the chip clamping half bodies 5, 6, the tips 8, 9 can be securely attached to the holder main body 1.

Besides, the end mill holder of the invention is embodied by that a split stopper pin 10 is squeezed into the holder main body diametrically thereof and fixed in the holder main body 1 so as to regulate the axial motion of the tips by contact with the back end of the tips which are fitted in the engagement grooves. This arrangement enables the longitudinal positioning of the tips 8, 9 with a simple configuration.

Besides, the end mill holder of the invention is embodied by the arrangement that the engagement grooves are formed into a shape like a dovetail groove in cross section. In addition, the throw-away tip of the invention is embodied by the arrangement that the laterally exposed front face 20 of the tip bodies 15 has the inclining face 22 on the section adjacent to the positioning face 17, which face 22 is so formed as to match the cross-sectional dovetail-like shape of the engagement grooves 2, 3. With both of these arrangements, there is no fear that the tips 8, 9, fitted in the holder main body 1, leave therefrom when a greater centrifugal force occurs due to a high speedy rotation of the tip body 15.

Besides, the end mill holder of the invention is embodied by the arrangement that both the tips 8, 9 are provided with cutouts 11, 12 (11a, 12a) in the opposing interior ends side, of which both are totally of such a size that the clamp bolt 7 can pass through the cutouts when the clamp bolt 7 is screwed into both the clamping half bodies 5, 6 in a direction perpendicular to a fitting seat of each of the tips. With this arrangement, it is not required to provide the tips 8, 9 with a full-circular penetration hole, as in the prior art, to allow the passing-through of the clamp bolt. This enables the reduction of the tips to a smaller size, and serves to reduce the holder main body to a smaller size, from the aspect of that a pair of the tips 8, 9 can be fixed in the holder main body 1 with the use of the single clamp bolt 7.

Besides, the end mill holder of the invention is embodied by the arrangement that both the tips 8, 9 are provided with cutouts 11, 12 (11a, 12a) in the opposing interior ends side, of which both are totally of such a size that the clamp bolt 7 can pass through the cutouts when the clamp bolt 7 is screwed into both the clamping half bodies 5, 6 in a direction of a requisite angle from a line perpendicular to a fitting seat of each of the tips. This arrangement not only accomplish the effects as described in the just above paragraph, but also can use a greater space of the tip pockets 24, 25 for the discharge of cut chips, so that the discharge of cut chips is well performed, and it is possible to cut a workpiece deeply tangentially to a curve of a greater diameter.

Besides, the end mill holder of the invention is embodied by comprising a holder main body; one engagement groove 2a which is formed in the holder main body 1 and is extended longitudinally of the holder main body with a deviation of a predetermined axial spiral angle α relative to the axis; a slit-like notch 4a formed in the holder main body 1 so as to cross the holder main body 1 from the engagement groove 2a to the opposite side; the holder main body 1 including a pair of chip clamping half bodies 5, 6 on bilateral sides from the engagement groove 2a and the slit-like notch 4a; wherein the tip 8a, fitted into the engagement groove 2a, is forcibly clamped to a pair of the chip clamping half bodies 5, 6 by the clamp bolt 7 screwed thereinto. With this arrangement, the single tip 8a is used, but the tip can be fitted securely in the holder main body 1 with ease, and can take the axial spiral α of a greater angle in the holder main body 1. Further, it is possible to make the major cutting edge to extend more greatly longitudinally, and it is also possible to cut a workpiece deeply tangentially to a curve of a greater diameter. The other effects obtained from the first embodiment can also be almost accomplished.

Besides, the throw-away tip of the invention is embodied by comprising a plate-like tip body 15 elongated longitudinally, which has the major cutting edge 16 formed on the outer face of the opposing longitudinal margins, a positioning face 17 on the inner face, and an end cutting edge 18 on the forward end face, opposing front and rear lateral faces 20, 21 of the tip body 15 which are of a surface to be clamped. This arrangement can simplify the construction and configure the tip in a small size.

Besides, the throw-away tip of the invention is embodied by the arrangement that the laterally exposed face 20 of the tip bodies 15 has an inclining face 23 of the requisite radial rake angle on the section adjacent to the major cutting edge 16. This arrangement makes it possible to provide a greater rake angle θ, coupled with the formation of the engagement groove in the holder main holder with the deviation of the axial spiral α, so as to enhance the cutting efficiency to a great degree.

Besides, the throw-away tip is embodied by the arrangement that there are provided semicircular cutoffs 11, 12 (11a, 12a) in the opposing interior ends including the positioning face 17 of the tip bodies 15 in order to screw the clamp bolt 7 through. With this arrangement, it is not required to provide the tip 15, as in the prior art, with a full-circular penetration hole for the clamp bolt, so that a proportion of the cutouts 11, 12 to the tip bodies 15 is made less and thereby the tips 8, 9 themselves can be made in a smaller size.

## Claims

1. An end mill holder comprising a holder main body 1; a pair of tip engagement grooves 2, 3 which are formed in the holder main body 1 at the positions of point symmetry relative to a central axis O of the holder main body and are extended longitudinally of the holder main body with a deviation of a predetermined axial spiral angle α relative to the axis; a slit-like notch 4 formed in the holer main body 1 between a pair of the engagement grooves 2, 3 so as to communicate with one another of the grooves; the holder main body 1 being subdivided into a pair of chip clamping half bodies 5, 6 on bilateral sides from both the engagement grooves 2, 3 and the slit-like notch 4 communicating therewith; a clamping bolt 7 screwed into both the chip clamping half bodies;
wherein the tips 8, 9 are fitted into the engagement grooves 2, 3 and are forcibly clamped to a pair of the chip clamping half bodies 5, 6 by the clamp bolt 7 screwed thereinto.

2. The end mill holder in accordance with claim 1, wherein a split stopper pin 10 is squeezed into the holder main body 1 diametrically thereof and fixed in the holder main body 1 so as to regulate the axial motion of the tips by contact with the back end of the tips which are fitted longitudinally in the engagement grooves.

3. The end mill holder in accordance with claim 1 or 2, wherein the engagement grooves 2, 3 are formed into a shape like a dovetail groove in cross section.

4. The end mill holder in accordance with claim 1, 2 or 3, wherein both the tips 8, 9 are provided with cutouts 11, 12 (11a, 12a) in the opposing interior ends side, of which both are totally of such a size that the clamp bolt 7 can pass through the cutouts when the clamp bolt 7 is screwed into both the clamping half bodies 5, 6 in a direction perpendicular to a fitting seat of each of the tips.

5. The end mill holder in accordance with claim 1, 2 or 3, wherein both the tips 8, 9 are provided with cutouts 11, 12 (11a, 12a) in the opposing interior ends side, of which both are totally of such a size that the clamp bolt 7 can pass through the cutouts when the clamp bolt 7 is screwed into both the clamping half bodies 5, 6 in a direction of a requisite angle from a line perpendicular to a fitting seat of each of the tips.

6. An end mill holder comprising a holder main body; one engagement groove 2a which is formed in the holder main body 1 and is extended longitudinally of the holder main body with a deviation of a predetermined axial spiral angle α relative to the axis; a slit-like notch 4a formed in the holder main body 1 so as to cross the holder main body 1 from the engagement groove 2a to an opposite side; the holder main body 1 being subdivided into a pair of chip clamping half bodies 5, 6 on bilateral sides from the engagement groove 2a and the slit-like 4a; a clamping bolt 7 screwed into both the chip clamping half bodies; wherein the tip 8a is fitted into the engagement groove 2a and is forcibly clamped to a pair of the chip clamping half bodies 5, 6 by the clamp bolt 7 screwed thereinto.

7. A throw-away tip comprising a plate-like tip body 15 elongated longitudinally, which has the major cutting edge 16 formed on the outer face of the opposing longitudinal margins, a positioning face 17 on the inner face, and an end cutting edge 18 on the forward end face, and opposing front and rear lateral faces 20, 21 of the tip body 15 which are of a surface to be clamped.

8. The throw-away tip in accordance with claim 7, wherein the front lateral face 20 of the tip bodies 15 has an inclining face 22 on the section adjacent to the positioning face 17, which face 22 is so formed as to match the cross-sectional dovetail-like shape of the engagement grooves 2, 3.

9. The throw-away tip in accordance with claim 7 or 8, wherein the front lateral face 20 of the tip bodies 15 has another inclining face 23 of the requisite radial rake angle on the section adjacent to the major cuffing edge 16.

10. The throw-away tip in accordance with claim 7, 8 or 9, wherein there are provided semicircular cutoffs 11 (12) in the opposing interior ends on the side of the positioning faces 17 of the tip bodies 15 in order to screw the clamp bolt 7 through.
